# EUROPEAN PATENT SPECIFICATION

(11) **EP 3 868 937 B1**
(45) Date of publication and mention of the grant of the patent: **02.08.2023**
(21) Application number: 20159159.1
(22) Date of filing: 24.02.2020
(51) Int. Cl.: D05C 17/00, B32B 7/09

(54) **METHOD FOR MANUFACTURING AN EMBROIDERED TEXTILE PRODUCT WITH 3D EFFECTS AND A PRODUCT THUS OBTAINED**
VERFAHREN ZUR HERSTELLUNG EINES GESTICKTEN TEXTILPRODUKTS MIT 3D-EFFEKTEN UND SO ERHALTENES PRODUKT
PROCÉDÉ DE FABRICATION D'UN PRODUIT TEXTILE BRODÉ À EFFETS 3D ET PRODUIT AINSI OBTENU

(43) Date of publication of application: 25.08.2021
(73) Proprietor: Christian Dior Couture SA, 75008 Paris (FR)
(72) Inventor: CHIURI, Maria Grazia, 00151 Roma (IT); INNOCENTI, Gianluca, 06124 Perugia (IT)
(74) Representative: Plasseraud IP

(56) References cited:
- US-A1- 2005 087 113
- US-A1- 2007 204 783

## Description

The present invention relates to a method for manufacturing an embroidered textile product and a product thus obtained.

In particular, the invention relates to a method for manufacturing an embroidered textile product by means of computerized embroidery machines and an embroidered textile product especially suited to the manufacture of bags.

The use of computerized embroidery machines is known for manufacturing embroidered textile products with three-dimensional effects.

In particular, methods are known that involve carrying out the embroidering on overlying layers of textile materials, including water-soluble materials.

In general, in the known methods, the water-soluble material is used as a stabilizer, in conjunction with a base fabric, to provide support and temporary thickness to the fabric during the embroidering stage and to ensure that, once removed, the embroidered section is at a distance from the base fabric and thereby creates a three-dimensional effect.

By way of example, patent application EP2045387A1 illustrates a method for creating three-dimensional embroidery wherein, at first a fabric (e.g. chosen from tulle, cotton, linen, polyester, TNT) is coupled with a layer of water-soluble material, then the machine embroidery is carried out on the fabric/water-soluble layer combination, and finally the water-soluble layer is dissolved. Further examples of three-dimensional embroidery are disclosed in US 2005/087113 A1 and US 2007/204783 A1.

Textile products embroidered by machine using known methods have certain drawbacks. Firstly, embroidery designs involving a large number of stitches are difficult to execute on automatic multi-head machines due to the tensions transmitted to the fabric, which can influence the embroidering operation performed by adjacent heads.

Secondly, the three-dimensional effects obtained with the embroidery are generally limited.

Thirdly, in order to create complex embroidery designs, it is necessary to use base fabrics with an adequate structure, which generally results in the final embroidered product being not very flexible and unsuitable, for example, for the manufacture of bags.

Lastly, the embroidery on the reverse of the final product generally appears rough and with free portions of thread. For this reason, known embroidered textile products are generally lined on the reverse side or coupled on that side.

The object of the present invention is to provide a method for manufacturing an embroidered textile product with three-dimensional effects that is not affected by the afore-mentioned drawbacks.

A further object is to provide embroidering effects similar to those of loom-produced embroidery.

Furthermore, an object of the invention is to provide a method for manufacturing an embroidered textile product specially adapted for manufacturing bags, and more specifically, of unlined bags.

Said objects are achieved with a method and a product as described in the accompanying claims.

Further objects and advantages of the invention, together with the technical characteristics, will become evident from the following detailed description of several non-limiting examples thereof.

A method according to the present invention, for manufacturing an embroidered textile product by means of a multi-head type of computerized embroidery machine, comprises the following steps.

In a first, preliminary step, the desired embroidery design is created using any suitable software for the generation of an instruction file that can be read by the computerized embroidery machine used.

According to a peculiar aspect of the invention, at least a part of the embroidery stitches is not selected from the software library used, but is rather defined in the course of creating the design, based on the desired effects.

Next, according to the invention, a lower supporting layer is provided, consisting of one or more layers of water-soluble gauze, e.g. PVA, and preferably at least two layers of gauze, with a weight of around 40 gr/m².

The support extends for the entire length of the machine (i.e. it is a continuous piece of gauze) and it is stretched out and attached to the anchoring frame movable above a horizontal surface beneath the embroidering heads.

On top of the lower supporting layer, anchored to the movable frame, there is then placed a plurality of layers - together constituting an upper supporting layer - chosen from polyester-cotton fabrics, non-woven polypropylene fabric ("polibond" or "polybond"), even with different weights, and water-soluble gauzes.

The upper supporting layer preferably comprises at least a layer of non-woven polypropylene fabric and at least a layer of fabric made of polyester-cotton.

In a particularly advantageous embodiment of the invention, the upper supporting layer consists of two layers of light-colored polyester-cotton fabric with at least two interposed layers of non-woven polypropylene fabric, which can have equal weights of around 45 gr/m² or different weights of around 45 and 100 gr/m².

The upper support layers also extend in continuous pieces along the entire length of the machine, although for the reason given below, they are not fixed to the anchoring frame along with the lower layer, but rather initially are only placed on top thereof.

At this point the embroidery machine is activated, with the heads of which all simultaneously performing the same sewing-embroidery operations.

To begin with, by means of stitching each head delimits the outer perimeter of the embroidery area and possibly the outlines of two or more portions inside the area, while also securing the upper supporting layer to the lower supporting layer.

The pieces of the upper layer are then cut in a direction transversal to their longitudinal extension, so as to separate the upper supporting layer of adjacent embroidering areas.

The result is that the different embroidering areas share the lower support layer - consisting of the pieces of water-soluble gauze attached to the frame movable in the machine's working plane - to which they are attached, but they are not attached to one another when it comes to the upper support layer.

In this manner the different embroidering areas move in perfect synchronization below the heads, and the tensions generated by the embroidering stitches in each area, particularly in the case of complex designs, do not substantially influence the embroidering of the adjacent areas.

Once the embroidering areas have been defined, including internally, and separated as indicated above, the phases of actually embroidering the design begin.

Said phases comprise:
- partially or completely embroidering in one or more colors of one or more portions of the embroidering area, using standard filling stitches selected in the software library used for creating the design, at least one portion not being affected by the embroidering;
- overlaying one or more thermogauzes on the embroidered portion(s) and embroidering three-dimensional elements of the design in different color(s), said phase also being repeatable depending on the three-dimensional and chromatic effects desired;
- overlaying at least one layer of non-woven polypropylene fabric on the portion of the embroidering area not yet affected by the embroidering, and embroidering of said portion using ad-hoc designed filling stitches;
- overlaying one or more thermogauzes on the last embroidered portion and embroidering of additional three-dimensional elements.

In a preferred embodiment, the method involves:
- sub-dividing the embroidering area into two rectangular portions of substantially the same height, separated by a third rectangular portion of a lower height;
- performing the complete embroidering of the two outer portions in a first color using a standard filling stitch;
- overlaying a first thermogauze having a weight higher than 98 gr/m², for instance, on the embroidered portions and embroidering three-dimensional elements of the design in a second color;
- overlaying a second thermogauze having a weight lower than 40 gr/m², for instance, preferably coupled with a thermogauze of a higher weight, and embroidering additional three-dimensional elements of the design in a third color;
- overlaying a layer of black non-woven polypropylene with a weight of around 45 gr/m² on the intermediate portion of the embroidering area not yet affected by the embroidering, and embroidering said intermediate portion, using ad-hoc designed filling stitches;
- overlaying several thermogauzes, preferably three thermogauzes, of the kind of the first thermogauze mentioned above, on the last embroidered portion and embroidering additional three-dimensional elements, preferably writing.

Once the embroidering has been completed, the embroidered areas are separated from one another and subjected to hot pressing and blowing to remove the thermogauzes. Once trimmed and finished at the edges, the embroidered portions of fabric obtained can be advantageously used in the form of panels for the manufacture of bags.

According to an innovative aspect of the present method, washing is not contemplated for the removal of the water-soluble gauzes.

Surprisingly, it has been discovered that water-soluble gauzes can be used to provide a permanent supporting sub-layer that, on the one hand and as expected, makes it possible to perform simultaneous embroidering with all of the machine heads, even of complex designs involving a large number of stitches, without the embroidering performed by any head substantially influencing the embroidering performed by adjacent heads, and on the other hand - along with the upper support layer described above - it gives the final embroidered textile product excellent consistency and flexibility, especially for the manufacture of bags, especially unlined shopping bags.

Indeed, according to a further characteristic of the invention, in order to improve the appearance of the embroidering on the reverse of the final product, threads of the same color as the threads used for the embroidering and preferably having a lower titre are used as bobbin threads.

## Claims

1. Method for the manufacture, using a multi-head computerized machine, of an embroidered textile product with a design having three-dimensional effects, comprising the following steps:
- creating the desired embroidery design using any suitable software for the generation of an instruction file that can be read by the computerized embroidery machine used;
- providing a lower supporting layer consisting of one or more layers of water-soluble gauze, said lower supporting layer extending for the entire length of the machine and being attached to the anchoring frame movable above a horizontal surface beneath the embroidering heads;
- placing on top of the lower supporting layer a plurality of layers, also extending in continuous pieces along the entire length of the machine and together constituting an upper supporting layer, chosen from polyester-cotton fabrics, non-woven polypropylene fabrics, even with different weights, and water-soluble gauzes;
- activating the embroidering machine, with the heads all simultaneously performing the same programmed sewing-embroidery operations;
- at each head, delimiting - by means of stitching - the outer perimeter of an embroidering area and possibly the outlines of two or more portions inside the area, while also securing the upper supporting layer to the lower supporting layer;
- cutting the upper supporting layer in a direction transversal to their longitudinal extension, so as to separate the upper supporting layers of adjacent embroidering areas;
- for each embroidering area:
- partially or completely embroidering, in one or more colors, one or more portions of the embroidering area, at least one portion not being affected by the embroidering;
- overlaying one or more thermogauzes on the embroidered portion(s) and embroidering three-dimensional elements of the design in different color(s), said phase also being repeatable depending on the three-dimensional and chromatic effects desired;
- overlaying at least one layer of non-woven polypropylene fabric on the portion of the embroidering area not yet affected by the embroidering, and embroidering of said portion;
- overlaying one or more thermogauzes on the last embroidered portion and embroidering of additional three-dimensional elements;
- separating the embroidering areas and subjecting them to hot pressing and blowing to remove the thermogauzes.

2. Method according to claim 1, wherein the upper support layer comprises at least a layer of non-woven polypropylene fabric and at least a layer of fabric made of polyester-cotton.

3. Method according to claim 2, wherein the upper supporting layer consists of two layers of light-colored polyester-cotton fabric with at least two interposed layers of non-woven polypropylene fabric.

4. Method according to any one of the preceding claims, wherein the embroidering of each area comprises the following steps:
- sub-dividing the area into two rectangular portions of substantially the same height, separated by a third rectangular portion of a lower height;
- performing the complete embroidering of the two outer portions in a first color;
- overlaying a first thermogauze on the embroidered portions and embroidering three-dimensional elements of the design in a second color;
- overlaying a second thermogauze, preferably coupled with a thermogauze of a lighter weight, and embroidering additional three-dimensional elements of the design in a third color;
- overlaying a layer of black non-woven polypropylene on the intermediate portion of the embroidering area not yet affected by the embroidering, and embroidering said intermediate portion;
- overlaying several thermogauzes, preferably three thermogauzes, on the last embroidered portion and embroidering additional three-dimensional elements, preferably writing.

5. Method according to any of the previous claims, wherein the bobbin threads used are of the same color as the threads used for the embroidering and preferably having a lower titre.

6. Embroidered textile product with a design having three-dimensional effects, manufactured according to one or more of the previous claims, wherein the embroidery support comprises a lower layer consisting of one or more layers of water-soluble gauze.

7. Shopping bag composed of textile panels embroidered according to one or more of the claims from 1 to 5.

## Patentansprüche

1. Verfahren zur Herstellung eines gestickten Textilprodukts mit einem Design mit dreidimensionalen Effekten unter Verwendung einer computergestützten Mehrkopfmaschine, das die folgenden Schritte aufweist:
- Erzeugen des gewünschten Stickdesigns unter Verwendung einer geeigneten Software für die Erzeugung einer Anweisungsdatei, die von der verwendeten computergestützten Stickmaschine gelesen werden kann;
- Bereitstellen einer unteren Trägerschicht, die aus einer oder mehreren Schichten aus wasserlöslicher Gaze besteht, wobei diese untere Trägerschicht sich über die gesamte Länge der Maschine erstreckt und an dem Verankerungsrahmen, der in einer horizontalen Oberfläche unterhalb der Stickköpfe beweglich ist, befestigt ist;
- Anordnen mehrerer Schichten, die sich ebenfalls in zusammenhängenden Stücken über die gesamte Länge der Maschine erstrecken und zusammen eine obere Trägerschicht bilden, die aus Polyester-Baumwollstoffen, Polypropylen-Vliesstoffen, auch mit unterschiedlichen Gewichten, und wasserlöslicher Gaze ausgewählt werden, auf der Oberseite der unteren Trägerschicht;
- Aktivieren der Stickmaschine, wobei alle Köpfe gleichzeitig die gleichen programmierten Näh-Stickarbeitsgänge durchführen;
- an jedem Kopf - Begrenzen des Außenumfangs eines Stickbereichs und möglicherweise der Umrisse von zwei oder mehr Abschnitten im Inneren des Bereichs mittels Absteppen, während auch die obere Trägerschicht an der unteren Trägerschicht befestigt wird;
- Schneiden der oberen Trägerschicht in einer Richtung quer zu ihrer Längsausdehnung, um die oberen Trägerschichten benachbarter Stickbereiche zu trennen;
- für jeden Stickbereich:
- teilweises oder vollständiges Sticken in einer oder mehreren Farben, eines oder mehrerer Abschnitte des Stickbereichs, wobei wenigstens ein Abschnitt nicht von dem Sticken betroffen ist;
- Überlagern einer oder mehrerer Thermogazes auf den/die gestickten Abschnitt/e und Sticken dreidimensionaler Elemente des Designs in verschiedener/n Farbe/n, wobei diese Phase abhängig von den erwünschten dreidimensionalen und Farbeffekten auch wiederholbar ist;
- Überlagern wenigstens einer Schicht aus Polypropylen-Vliesstoff auf den Abschnitt des Stickbereichs, der noch nicht von dem Sticken betroffen ist, und Besticken dieses Abschnitts;
- Überlagern einer oder mehrerer Thermogazes auf den letzten gestickten Abschnitt und Sticken zusätzlicher dreidimensionaler Elemente;
- Trennen der Stickbereiche und Aussetzen dieser einer Heißpressung und Blasen, um die Thermogazes zu entfernen.

2. Verfahren nach Anspruch 1, wobei die obere Trägerschicht wenigstens eine Schicht aus Polypropylen-Vliesstoff und wenigstens eine Schicht aus Stoff, der aus Polyester-Baumwolle hergestellt ist, aufweist.

3. Verfahren nach Anspruch 2, wobei die obere Trägerschicht aus zwei Schichten aus hellfarbenem Polyester-Baumwollstoff mit wenigstens zwei eingefügten Schichten aus Polypropylen-Vliesstoff zusammengesetzt wird.

4. Verfahren nach einem der vorhergehenden Ansprüche, wobei das Sticken jedes Bereichs die folgenden Schritte aufweist:
- Unterteilen des Bereichs in zwei rechteckige Abschnitte mit im Wesentlichen der gleichen Höhe, die durch einend dritten rechteckigen Abschnitt mit einer geringeren Höhe getrennt sind;
- Durchführen des vollständigen Stickens der zwei äußeren Abschnitte in einer ersten Farbe;
- Überlagern einer ersten Thermogaze auf die gestickten Abschnitte und Sticken dreidimensionaler Elemente des Designs in einer zweiten Farbe;
- Überlagern einer zweiten Thermogaze, die vorzugsweise mit einer Thermogaze mit einem geringeren Gewicht gekoppelt ist, und Sticken zusätzlicher dreidimensionaler Elemente des Designs in einer dritten Farbe;
- Überlagern einer Schicht aus schwarzem Polypropylenvlies auf den Zwischenabschnitt des Stickbereichs, der noch nicht von dem Sticken betroffen ist, und Sticken dieses Zwischenabschnitts;
- Überlagern einiger Thermogazes, vorzugsweise von drei Thermogazes, auf den letzten gestickten Abschnitt und Sticken zusätzlicher dreidimensionaler Elemente, vorzugsweise Schrift.

5. Verfahren nach einem der vorhergehenden Ansprüche, wobei die verwendeten Unterfäden die gleiche Farbe wie die zum Sticken verwendeten Fäden haben und vorzugsweise einen kleineren Titer haben.

6. Gesticktes Textilprodukt mit einem Design mit dreidimensionalen Effekten, das nach einem oder mehreren der vorhergehenden Ansprüche hergestellt ist, wobei der Stickträger eine untere Schicht aufweist, die aus einer oder mehreren Schichten aus wasserlöslicher Gaze besteht.

7. Einkaufstasche aus Stoffbahnen, die nach einem oder mehreren der Ansprüche 1 bis 5 bestickt sind.

## Revendications

1. Procédé pour la fabrication, à l'aide d'une machine informatisée à têtes multiples, d'un produit textile brodé avec un motif présentant des effets tridimensionnels, comprenant les étapes suivantes :
- la création du motif de broderie souhaité à l'aide de tout logiciel approprié pour la génération d'un fichier d'instructions qui peut être lu par la machine à broder informatisée utilisée ;
- la fourniture d'une couche de support inférieure consistant en une ou plusieurs couches de gaze soluble dans l'eau, ladite couche de support inférieure s'étendant sur toute la longueur de la machine et étant fixée au cadre d'ancrage mobile au-dessus d'une surface horizontale sous les têtes à broder ;
- la mise en place sur la couche de support inférieure d'une pluralité de couches, s'étendant également en pièces continues sur toute la longueur de la machine et constituant ensemble une couche de support supérieure, choisies parmi des tissus de polyester-coton, des tissus de polypropylène non tissé, même avec différents poids, et des gazes solubles dans l'eau ;
- l'activation de la machine à broder, avec les têtes effectuant toutes simultanément les mêmes opérations de couture-broderie programmées ;
- au niveau de chaque tête, la délimitation - au moyen d'un piquage - du périmètre extérieur d'une zone de broderie et facultativement des contours de deux parties ou plus à l'intérieur de la zone, tout en immobilisant également la couche de support supérieure sur la couche de support inférieure ;
- la découpe de la couche de support supérieure dans une direction transversale à leur extension longitudinale, de manière à séparer les couches de support supérieures de zones de broderie adjacentes ;
- pour chaque zone de broderie :
- la broderie partielle ou complète, dans une ou plusieurs couleurs, d'une ou plusieurs parties de la zone de broderie, au moins une partie n'étant pas affectée par la broderie ;
- le recouvrement d'une ou plusieurs thermogazes sur la(les) partie(s) brodée(s) et la broderie d'éléments tridimensionnels du motif en couleur(s) différente(s), ladite phase pouvant être également répétée en fonction des effets tridimensionnels et chromatiques souhaités ;
- le recouvrement d'au moins une couche de tissu de polypropylène non tissé sur la partie de la zone de broderie pas encore affectée par la broderie, et la broderie de ladite partie ;
- le recouvrement d'une ou plusieurs thermogazes sur la dernière partie brodée et la broderie d'éléments tridimensionnels supplémentaires ;
- la séparation des zones de broderie et la soumission de celles-ci à un pressage à chaud et à un soufflage afin de retirer les thermogazes.

2. Procédé selon la revendication 1, dans lequel la couche de support supérieure comprend au moins une couche de tissu de polypropylène non tissé et au moins une couche de tissu composé de polyester-coton.

3. Procédé selon la revendication 2, dans lequel la couche de support supérieure consiste en deux couches de tissu de polyester-coton de couleur claire avec au moins deux couches de tissu de polypropylène non tissé intercalées.

4. Procédé selon l'une quelconque des revendications précédentes, dans lequel la broderie de chaque zone comprend les étapes suivantes :
- la subdivision de la zone en deux parties rectangulaires de sensiblement la même hauteur, séparées par une troisième partie rectangulaire d'une hauteur plus basse ;
- la réalisation de la broderie complète des deux parties extérieures dans une première couleur ;
- le recouvrement d'une première thermogaze sur les parties brodées et la broderie d'éléments tridimensionnels du motif dans une deuxième couleur ;
- le recouvrement d'une deuxième thermogaze, de préférence couplée à une thermogaze d'un poids plus faible, et la broderie d'éléments tridimensionnels supplémentaires du motif dans une troisième couleur ;
- le recouvrement d'une couche de polypropylène non tissé noir sur la partie intermédiaire de la zone de broderie pas encore affectée par la broderie, et la broderie de ladite partie intermédiaire ;
- le recouvrement de plusieurs thermogazes, de préférence trois thermogazes, sur la dernière partie brodée et la broderie d'éléments tridimensionnels supplémentaires, de préférence de l'écriture.

5. Procédé selon l'une quelconque des revendications précédentes, dans lequel les fils de bobine utilisés sont de la même couleur que les fils utilisés pour la broderie et présentant de préférence un titre plus faible.

6. Produit textile brodé avec un motif présentant des effets tridimensionnels, fabriqué selon une ou plusieurs des revendications précédentes, dans lequel le support de broderie comprend une couche inférieure consistant en une ou plusieurs couches de gaze soluble dans l'eau.

7. Sac de courses composé de panneaux textiles brodés selon une ou plusieurs des revendications 1 à 5.
